# EUROPEAN PATENT APPLICATION

(11) **EP 2 947 479 A1**
(43) Date of publication of application: **25.11.2015**
(21) Application number: 14305756.0
(22) Date of filing: 22.05.2014
(51) Int. Cl.: G01V 1/20

(54) **A transmission cable provided with an anchor and a method for providing a transmission cable with an anchor**

(71) Applicant: Sercel, 44470 Carquefou (FR)
(72) Inventor: Dabouineau, Johann, 31800 Villeneuve De Riviere (FR); Relion, Thibault, 31800 Saint Gaudens (FR); Pichot, Yann, 44000 Nantes (FR); Gambini, Simon, 65130 Capvern (FR)
(74) Representative: Péru, Laurence

(57) **Abstract**

It is proposed a transmission cable (1), in particular in a geophysical equipment, said cable having a longitudinal axis (X) and including:
- at least one conductor (2), for transmission of data and/or current,
- at least one strength member in the cable, around said at least one conductor,
- an external jacket (7),
- a grinded area (10) on the external jacket (7),
- an anchor (12) that is overmolded on said grinded area (10).

## Description

### 1. Field of the invention

The present invention relates to the cables especially for geophysical equipment, in particular in the field of seismic prospection and seismic data acquisition but also in any application that requires anchoring strength for a cable. More specifically, the invention relates to seismic data acquisition systems including a cabled network connected to a central processing unit, for example on-board a vehicle.

The invention particularly relates to the seismic prospecting method for oil industry, but may be applied to any field implementing a seismic data acquisition network or any application that requires anchoring strength for a cable. However, one particular application of the invention relates to land seismic data acquisition systems.

### 2. Technological background

In the field of the invention, seismic data acquisition operations in the field conventionally use networks of electronic units whereto geophysical or seismic sensors are connected.

In an embodiment, these sensors, generally referred to using the term geophones, are generally interconnected in groups of sensors by cables to form clusters referred to as "strings". One or a plurality of these strings are connected to said electronic units. The electronic units, interconnected by a cabled digital network, perform the analogue to digital conversion (ADC) of the signal from the groups of sensors. In another embodiment, the sensors are of the digital kind, the signals they send to the electronic units being already digital.

In both embodiments, the electronic units send these data to the recording truck via said digital network, a central data processing unit being on-board the truck.

To collect the geophysical data, one or a plurality of seismic sources in contact with the ground are activated to propagate omnidirectional seismic wave trains. The sources may among other things consist of explosives, falling weights, vibrators or air guns in marine environments.

The wave trains reflected by the layers of the subsurface are detected by the sensors, which generate an analogue signal characterising the reflection of the waves on the geological interfaces of the subsurface.

As specified above, the invention particularly applies to seismic data acquisition system implementing a cabled network.

In this type of network, the data are conventionally sent from the ADC electronic unit to the central processing unit via electronic modules called concentrators.

These electronic modules perform different functions, including:
- power supply of the units via batteries;
- synchronisation of the units;
- processing of the signal and the interface with the digital network (transfer of data to the central processing unit, sending of commands received from the central processing unit to the units).

Land seismic operations take place in three kinds of areas or zones:
- dry areas, in which there are very low tensile stress, and for which the equipment including cables and electronic modules is required to have a watertightness down to 1 m deep;
- marsh areas, in which there are low tensile stress and for which the equipment is required to have a high robustness and a watertightness down to 5 m deep;
- shallow water areas, in which there are high tensile stress and bending stress, and for which the equipment is required to have high robustness and watertightness up to 15 m deep.

Both marsh and shallow water areas are generally referred to as transition areas.

Geophysical equipment is generally used in dry and marsh and shallow water areas for about 95% of the land operations.

The equipment for these aforementioned land operations include transmission cables which are of various designs depending on the needs. In the geophysical industry, for marsh and shallow water operations, the cables are for example built as a transmission bundle including conductors made out of copper and assembled as transmission pairs or quad. These conductors are insulated wires and aim at transmitting the data through the equipment. Strength members or water-swellable yarns may be added on top of the bundle. The bundle may be jacketed with a hot-melt compound or gel-filled, aiming at providing watertightness. This assembly forms a core assembly of the cable.

The cables have to be resistant to tension, traction, crushing, temperature and UV aging and so on. A protection of the copper present in the transmission bundle of the cable is especially sought against the possible degradations.

The cable may be chosen among two different qualities of cables.

A first basic cable includes a core assembly and longitudinal paid off aramid strength member under a single thermoplastic jacket.

A second high-performance or reinforced cable includes a core assembly and at least one braid, for example aramid braid, in between two thermoplastic jackets, for example for marsh and shallow water operations, as it is more robust to handle the field constraints. This second high-performance cable therefore consists in a two passes jacketing of the core assembly. The two jackets are strongly bonded one onto the other during the extrusion process. The second high-performance cable is more adapted to resist to:
- passage of animals (rodents, ruminants, etc...);
- vandalism;
- passage of vehicle wheels.

The strength member such as the braid extending within the cable between the two thermoplastic jackets, along the longitudinal axis of the cable, may be integrated as a stress relief, providing the cable robustness and strength while not stressing the core assembly. In that configuration, the two jackets bond one to the other in the windows created by the braid. It has to be noted that these strength members are not necessarily braided but can alternatively be paid off or winded up.

Marsh and shallow water operations are particularly harsh for the connectors constituting the termination of the cables. The tension due to the current or tides as well as the equipment lay out or removal induces high forces that need to be transferred by the cable to the termination. An anchor may perform this transfer of high forces by anchoring the strength members.

A known solution of anchor is the addition of a piece with two openings and a bridge between the openings so that half of the yarns forming the braid pass in an opening and half of the yarns forming the braid pass in the other opening. A knot is made behind the bridge. However, such a solution is hand-operated, not qualitative and has a middle efficiency.

Another known solution is to add two interlocked cones between which the strength members are stuck. Such a solution is very effective. However, this solution is hand-operated and very difficult to make without damaging the strength members when stripping the external jacket, so that the operator needs to be trained and regularly tested. Furthermore, the size of the windows of the braid has to be defined so as to make possible to strip the external jacket. Thus, this solution is very costly and difficult to make.

Another known solution to anchor the strength member(s) is to add onto the cable a cylindrical anchor. However, the diameter of the cable is not exactly constant so that pressures are applied onto the cable or the cable may be pinched. Pressures and/or pinching shall damage the cable. Furthermore, the external jacket of the cable may be made of polyurethane. Such a material needs a mechanical or chemical pretreatment before the application of the anchor, which is costly. Moreover, breaks or tears for example due to shear stress appear in the cable near the ends of the anchor when submitted to tension. This solution is therefore industrially risky for the cable, and the efficiency is low.

### 3. Goals of the invention

The invention, in at least one embodiment, is aimed especially at overcoming these different drawbacks of the prior art.

More specifically, it is a goal of at least one embodiment of the invention to provide a technique for efficiently protecting a cable, especially used in a geophysical exploration context, against deteriorations due to tension, crushing, temperature and UV aging.

A particular goal of the invention is to provide a solution for stress relief of a strength member in the cable.

Another goal of the invention is to provide a repeatable and efficient anchor. Another goal of the invention is to simplify the cable design.

Another goal of the invention is to get rid of the cable geometry tolerances in the design of the anchor.

Another goal of the invention is to maximize the efficiency of an overmolded anchor, especially in the context of a reinforced cable.

### 4. Summary of the invention

A particular embodiment of the invention proposes a transmission cable, in particular for transmission of data and/or current in a geophysical equipment, said cable having a longitudinal axis and including:
- at least one conductor, for transmission of data and/or current,
- at least one strength member in the cable, around said at least one conductor,
- an external jacket,
- a grinded area on the external jacket,
- an anchor that is overmolded onto said grinded area.

It should be noted that the longitudinal axis of the cable does not prevent the cable from bending and from being quite flexible.

The longitudinal axis is along the cable when the cable is straight.

According to the invention and thanks to the anchor, a solution for stress relief of the at least one strength member in the cable is found. Indeed, the grinded area guarantees a more precise diameter of the cable than the extrusion process, so that the anchor overmolded onto said grinded area does not pinch nor apply pressure on the cable.

Another advantage of the invention is that the external jacket is thinner so that the forces are easier transmitted in order to anchor the cable.

An additional advantage is that the grinded area provides an altered surface so that the overmolded anchor adheres thereto. Indeed, in case of a polyurethane material forming the jacket, this material is known to sweat a non-adhesive layer on top of the jacket. This layer needs to be altered chemically or mechanically so as to allow the overmolding to stick. The grinded area may provide the roughness that is required for an efficient bond. In such case, the step of grinding of the external jacket so as to make the grinded area may include the mechanical or chemical treatment of the surface, so that no additional step may be required for such treatment.

The anchor may be a stress relief for the strength member.

The anchor may be at least partially tapered. Such a shape creates a gradual stress-relief with an increasing transmission of the stresses from the strength member within the anchor. This tapered shape aims at providing a stiffness gradient in the anchor. This may prevent a stress concentration at the beginning of the anchor that would create cracks when pulling the cable. This tapered shape may therefore prevent any breaks or tear to appear in the cable.

The anchor may for example have externally at least one groove, said groove having a circular shape around the longitudinal axis. Such a groove may be advantageous for allowing the overmolding of a possible supplemental piece, such as a termination, that may be added and that would adhere strongly thanks to the groove(s).

The anchor may have a first part having a tapered shape and a second part adjacent to the first part, having said at least one groove. In such embodiment, the first part may for example allow a stress relief and the second part may make the transmission of the stresses to a possible overmolded supplemental piece.

The grinded area has for example at least one end forming a mechanical stop, said mechanical stop being circular around the longitudinal axis, preferably the grinded area has two opposed ends, each end forming a mechanical stop.

In such case, the anchor may at least partially rest against said mechanical stop(s).

Thus, thanks to the mechanical stop(s), the anchor is stuck, being unable to move along the cable, which reinforces the stress relief role of the anchor, without any additional piece or step in a method of making the cable.

The anchor is advantageously configured to support at least partially stresses present in the strength member. This creates a stress relief of the cable, especially before a termination of the cable.

In a particular embodiment, the grinded area and anchor are present close to a termination of the cable such as a connector, or a node, or an electronic unit

The cable may include an internal jacket around said at least one conductor. In this case, the cable is a high-performance jacket with two different jackets. At least part of said at least one strength member may be present between the internal jacket and the external jacket. The strength member may be braided around the internal jacket. Alternatively, said strength member may be winded up around the internal jacket. Said strength member may be for example paid off on the internal jacket.

The internal jacket, the external jacket and/or the anchor include for example a polyurethane material.

Said at least one conductor may be present in a transmission bundle and may be in a number in the range one to eight, preferably an even number such as two, four, six or eight.

According to another aspect of the invention, alone or in combination with the above, there is provided a method for providing a cable with an anchor, said cable including at least one conductor, one strength member and one external jacket, the method including the following steps:
- grinding an area of the external jacket to a specific diameter, so as to form a grinded area,
- overmolding the anchor onto said grinded area.

Thanks to the method according to the invention, a solution for stress relief of the strength member in the cable is found. Indeed, grinding an area guarantees a precise diameter of the cable, so that the anchor overmolded onto said grinded area does not pinch nor apply pressure on the cable.

The method may further include a step of chemically and/or mechanically preparing an external surface of the grinded area and an adjacent portion thereof, before overmolding the anchor.

In a particular embodiment, the creation of the grinded area may include a mechanical treatment of the surface, in case of a polyurethane material, so that no additional step is required.

In the method, the step of grinding of an area of the external jacket may include making a mechanical stop at at least one end of said grinded area, and the step of overmolding of the anchor may be applied so that said anchor at least partially rests against at least one of said mechanical stop(s). Thanks to the making of mechanical stop(s), the anchor is stuck, being unable to move along the cable, which reinforces the stress relief role of the anchor.

### 5. List of figures

Other features and advantages of embodiments of the invention shall appear from the following description, given by way of an indicative and non-exhaustive examples and from the appended drawings, of which:
- Figure 1 is a schematic perspective view of a cable according to an embodiment of the invention, without the anchor,
- Figure 2 is a similar view of the cable of Figure 1, with the anchor,
- Figure 3 is a schematic longitudinal cross sectional view of the cable of Figure 1,
- Figure 4 is a schematic longitudinal cross sectional view of the cable of Figure 2,
- Figure 5 is a view similar to the Figure 4, showing the zones of clamping of the molds for the overmoulding of the anchor, and
- Figure 6 is a schematic cross sectional view of the inner part of an example of a cable.

### 6. Detailed description

The present invention relates to anchoring tranmission cables designed for being used in harsh and stressful environments, especially used in seismic operations in a context of oil prospection.

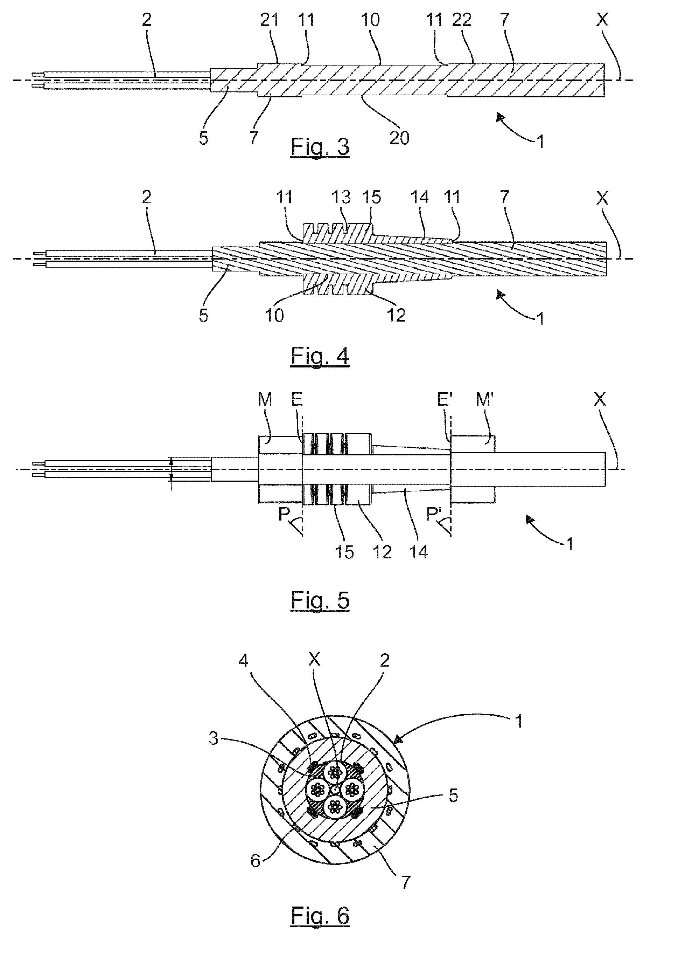

The cables used in geophysical for marsh and shallow water operation may be for example as the one shown in figure 6.

In this figure, the cable 1 is built as a transmission bundle made of an assembly of transmission pairs or, in this example, transmission quads with conductors 2. Around the transmission bundle 2, there is a waterblocking compound 3. Adjacent the waterblocking compound 3, there are strength members 4, in an internal or inner jacket 5. Around the internal jacket 5, there is a braid 6 as another strength member, said braid 6 being wrapped by an external jacket 7. The braid 6 provides much strength to the cable 1.

This cable 1 shown in figure 6 or any other type of transmission cable having a longitudinal axis X and including at least one conductor 2, for transmission of data and/or current, at least one strength member in the cable 1, around said at least one conductor 2, an external jacket 7, may be treated according to the method of the invention. The cable 1 according to the invention may have the features of the cable shown in Figure 6 or of any other type of cable having a longitudinal axis X and including at least one conductor 2, for transmission of data and/or current, at least one strength member in the cable, around said at least one conductor 2 and an external or outer jacket 7.

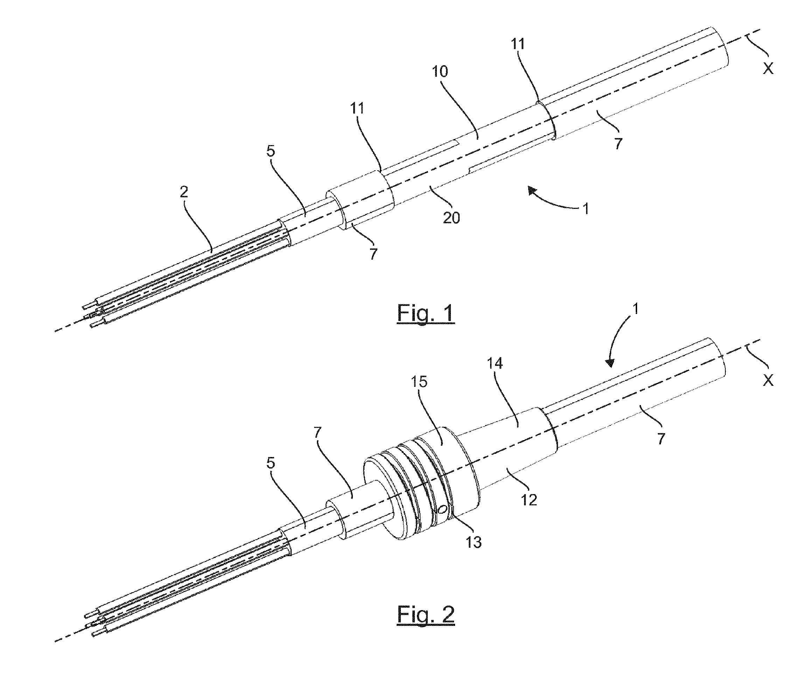

It should be noted that the longitudinal axis X does not prevent the cable from bending and from being quite flexible. The longitudinal axis X is along the cable 1 when the cable is straight, as shown in figures 1 to 5.

In figures 1 to 5, different elements of the cable 1 are visible, especially the conductors 2, the internal jacket 5 and the external jacket 7, although these elements are normally not visible from outside, except the external jacket 7.

Figures 1 and 3 show a portion of the cable 1, with a grinded area 10 made on the external jacket 7. The grinded area 10 was made by grinding of the external jacket 7 all around the longitudinal axis X, in the whole periphery of the cable 1, as shown, and uniformly in this example. The grinding of the external jacket 7 allows to precisely know the diameter of the external jacket 7 in the grinded area 10. Furthermore, the grinding of the external jacket 7 allows to make a mechanical and/or chemical treatment of the polymeric material forming the external jacket, for example a polyurethane. Moreover, the grinding of the external jacket 7 allows to make at least one mechanical stop 11, in this example two mechanical stops 11 at the ends of the grinded area 10. The mechanical stops 11 are made in this example uniformly in the whole periphery of the cable 1, as shown.

In Figures 2 and 4, the cable 1 is shown with an anchor 12 that has been overmolded on the grinded area 10, according to the invention. The anchor 12 covers in this embodiment the entire grinded area 10, in the whole periphery of the cable 1.

Thanks to the precise diameter of the cable 1 in the grinded area 10, the anchor 12 overmolded onto the grinded area 10 does not pinch nor apply pressure on the cable. This may prevent any tear or breaks of the cable 1 in this zone despite the presence of the anchor 12.

In this example, the anchor 12 is at least partially tapered. This shape may allow a progressive stress relief of the stresses in the cable 1, and especially of the stresses supported by the strength member, in particular by the braid 6 in this example.

Furthermore, the anchor 12 has externally at least one groove 13, said groove 13 having a circular shape around the longitudinal axis X. This groove 13 may be part of a link to a possible supplemental piece such as a termination that would be brought around the anchor 12, for example by overmolding.

More precisely, in this embodiment, the anchor 12 has a first part 14 having a tapered or frustoconical shape and a second part 15 adjacent to the first part 14, having said at least one groove 13, in this example three grooves 13, so as to increase the surface for the adhesion to a possible overmolded supplemental piece. The second part 15 has a generally cylindrical shape, as shown.

The anchor 12 at least partially rests against the mechanical stops 11, as shown in particular in figure 4. In this embodiment, the first part 14 of the anchor 12 rests against a first mechanical stop 11 and the second part 15 of the anchor 12 rests against a second, opposed, mechanical stop 11. Thus, thanks to the mechanical stops 11, the anchor 12 is stuck, being unable to move along the cable 1, which reinforces the stress relief role of the anchor 12.The anchor 12 is in this embodiment configured to support at least partially stresses present in the strength member formed by the braid 6.The presence of the anchor 12 creates a stress relief of the cable 1.

Figure 5 shows part of the moulds M and M' used during the overmolding of the anchor 12. The circular moulds M and M' are placed onto the external jacket 7, longitudinally externally to the grinded area 10, so that the ends E and E' of the moulds M and M' are in the same planes P and P' perpendicular to the longitudinal axis X, as the mechanical stops 11. Thus, the place of the moulds M and M' allows moulding the anchor 12 so that the anchor 12 rests against the mechanical stops 11.

The figures 1 to 6 show the cable 1 according to the invention, and they also show the method according to the invention. This method aims at providing a cable 1 with an anchor 12. The method includes the following steps:
- grinding an area of the external jacket 7 to a specific diameter, so as to form a grinded area 10, as shown in figures 1 and 3,
- overmolding the anchor 12 onto the grinded area 10, as shown in figures 2, 4 and 5.

The method further includes, in this embodiment, a step of chemically and/or mechanically preparing an outer surface 20 of the grinded area 10 and an adjacent portion thereof, in this example two adjacent portions 21 and 22, before overmolding the anchor 12.

The step of grinding of an area of the external jacket 7 includes in this embodiment making a mechanical stop 11 at at least one end of the grinded area 10, and the step of overmolding of the anchor 12 is applied so that the anchor 12 at least partially rests against at least one of said mechanical stop(s) 11, as already explained, in this embodiment.

In the specification and claims, the expression "includes a" has to be understood as meaning "includes at least one", unless expressly written.

## Claims

1. A transmission cable (1), in particular in a geophysical equipment, said cable having a longitudinal axis (X) and including:
- at least one conductor (2), for transmission of data and/or current,
- at least one strength member in the cable, around said at least one conductor,
- an external jacket (7),
- a grinded area (10) on the external jacket (7),
- an anchor (12) that is overmolded on said grinded area (10).

2. The cable (1) according to claim 1, wherein the anchor (12) is at least partially tapered.

3. The cable (1) according to claim 1 or 2, wherein the anchor (12) has externally at least one groove (13), said groove having a circular shape around the longitudinal axis (X).

4. The cable (1) according to claim 2 and 3, wherein the anchor (12) has a first part (14) having a tapered shape and a second part (15) adjacent to the first part (14), having said at least one groove (13).

5. The cable (1) according to any of claims 1 to 4, wherein the grinded area (10) has at least one end forming a mechanical stop (11), said mechanical stop (11) being circular around the longitudinal axis (X), preferably the grinded area (10) has two opposed ends, each end forming a mechanical stop (11).

6. The cable (1) according to claim 5, wherein the anchor (12) at least partially rests against said mechanical stop(s) (11).

7. The cable (1) according to any of claims 1 to 6, wherein the anchor (12) is configured to support at least partially stresses present in the strength member.

8. The cable (1) according to any of the preceding claims, wherein the grinded area (10) and anchor (12) are present close to a termination of the cable such as a connector, or an electronic unit, or a node.

9. The cable (1) according to any of the preceding claims, wherein the cable (1) includes an internal jacket (5) around said at least one conductor (2), and wherein at least part of said at least one strength member is present between the internal jacket (5) and the external jacket (7).

10. The cable (1) according to the preceding claim, wherein said strength member (6) is braided around the internal jacket (5).

11. The cable (1) according to claim 9, wherein said strength member (6) is winded up around the internal jacket (5).

12. The cable (1) according to claim 9, wherein said strength member (6) is paid off on the internal jacket (5).

13. The cable according to any of claims 9 to 12, wherein the internal jacket (5), the external jacket (7) and/or the anchor (12) include a polyurethane compound.

14. The cable (1) according to any of the preceding claims, wherein said at least one conductor (2) is present in a transmission bundle and is in a number in the range one to eight, preferably an even number such as two, four, six or eight.

15. A method for providing a cable (1) with an anchor (12), said cable (1) including at least one conductor (2), one strength member and one external jacket (7), the method including the following steps:
- grinding an area of the external jacket to a specific diameter, so as to form a grinded area (10),
- overmolding the anchor (12) onto said grinded area (10).

16. The method of claim 15, further including a step of chemically preparing an external surface of the grinded area (10) and an adjacent portion (20; 21, 22) thereof, before overmolding the anchor (12).

17. The method of claim 15 or 1§, wherein the step of grinding of an area of the external jacket (7) includes making a mechanical stop (11) at at least one end of said grinded area (10), and the step of overmolding of the anchor (12) is applied so that said anchor (12) at least partially rests against at least one of said mechanical stop(s) (11).
